# EUROPÄISCHE PATENTSCHRIFT

(11) **EP 3 161 359 B1**
(45) Veröffentlichungstag und Bekanntmachung des Hinweises auf die Patenterteilung: **07.03.2018**
(21) Anmeldenummer: 15722935.2
(22) Anmeldetag: 15.05.2015
(51) Int. Cl.: F16K 31/04, H02J 7/00, H02J 1/10, H02J 9/06, H02J 7/34

(54) **ARMATUREN-SCHLIESSVORRICHTUNG UND VERFAHREN ZUM BEREITHALTEN EINER ARMATUREN-SCHLIESSVORRICHTUNG**
VALVE CLOSING DEVICE AND METHOD FOR PROVIDING A VALVE CLOSING DEVICE
DISPOSITIF DE FERMETURE DE VANNE ET PROCÉDÉ DE RÉALISATION D'UN DISPOSITIF DE FERMETURE DE VANNE

(30) Priorität: 28.06.2014 DE 102014010042
(43) Veröffentlichungstag der Anmeldung: 03.05.2017
(73) Patentinhaber: AUMA Riester GmbH & Co. KG, 79379 Müllheim (DE)
(72) Erfinder: HOFMANN, Benjamin, 79423 Heitersheim (DE); PLATZER, Wilfried, 79100 Freiburg (DE)
(74) Vertreter: Börjes-Pestalozza, Henrich
(86) Internationale Anmeldenummer: PCT/EP2015/001006
(87) Internationale Veröffentlichungsnummer: WO 2015/197151

(56) Entgegenhaltungen:
- EP-A2- 0 851 163
- DE-A1- 3 840 125
- US-A- 5 894 222

## Beschreibung

Die Erfindung betrifft eine Armaturen-Schließvorrichtung mit einer Eingangswelle und einer mit der Eingangswelle gekoppelten Abtriebswelle und einem elektrisch betreibbaren Not-Antrieb, mit welchem die Abtriebswelle außerhalb eines Normalbetriebs antreibbar ist.

Derartige Armaturen-Schließvorrichtungen sind bekannt und werden beispielsweise bei Armaturen-Stellanordnungen eingesetzt, um die jeweils angeschlossene Armatur bei einer Störung oder einem sonstigen Ausfall des Normalbetriebs in einen definierten Endzustand, beispielsweise in einen geöffneten Zustand oder einen geschlossenen Zustand, zu überführen.

Hierbei sind Not-Antriebe bekannt, die auf unterschiedlichen technischen Prinzipien beruhen, wobei bevorzugt aus sicherheitstechnischen Aspekten solche Antriebstechnologien eingesetzt werden, die komplementär zu einer Antriebstechnologie des im Normalbetrieb arbeitenden Stellantriebs der Armaturen-Stellanordnung sind.

Die Erfindung betrifft weiter ein Verfahren zum Bereithalten einer Armaturen-Schließvorrichtung, wobei die Armaturen-Schließvorrichtung eine Eingangswelle und eine mit der Eingangswelle gekoppelte Abtriebswelle und einen elektrisch betreibbaren Not-Antrieb, mit welchem die Abtriebswelle außerhalb eines Normalbetriebs antreibbar ist, aufweist.

Hier sind unterschiedliche Verfahren je nach verwendeter Antriebstechnologie bekannt, um zu gewährleisten, dass der Not-Antrieb bei einem Ausfall oder einer Unterbrechung des Normalbetriebs funktionsfähig bereitsteht.

Aus der EP 0 851 163 A2 ist ein elektrischer Stellantrieb für ein Ventil oder dergleichen bekannt, wobei eine Notantriebsbaugruppe mit einer Akkumulatorbatterie auf einer Elektronikplatte steckbar angeordnet ist.

Aus DE 38 40 125 A1 ist eine Schiebereinrichtung bekannt, wobei eine Notstellvorrichtung als Energiespeicher mindestens einen elektrischen Akkumulator oder mindestens eine elektrische Batterie aufweist.

Aus US 5 894 222 A ist ein Batterie-Testverfahren zum individuellen Test sekundärer Batterien durch Laden und Entladen der Batterien bekannt, wobei ein gemeinsamer Batterietestkreis für beide Batterien ausgebildet ist.

Aus DE 19 827 478 A1 ist ein medizinisches Notfallgerät mit eingebauter Akkumulatoreinrichtung bekannt, wobei eine Steuereinrichtung in einem Pflegefunktionsbetrieb die Akkumulatoren nacheinander auf Ladeschlussspannung entlädt, und diese sodann wieder auflädt, wobei ein voller Akkumulator immer betriebsbereit gehalten ist.

Weiter ist aus der DE 38 40 125 A1 eine Notstellvorrichtung bekannt, welche eine Notantriebsvorrichtung aufweist, die im Gefolge des Ausfalls der Netzspannung mit aus mindestens einem Energiespeicher stammender Energie betreibbar ist.

Der Erfindung liegt die Aufgabe zugrunde, bei einer Armaturen-Schließvorrichtung einen elektrisch betreibbaren Not-Antrieb bereitzustellen, der sicherheitstechnischen Anforderungen genügt.
Zur Lösung dieser Aufgabe sind erfindungsgemäß bei einer Armaturen-Schließvorrichtung die Merkmale von Anspruch 1 vorgesehen. Insbesondere wird somit erfindungsgemäß bei einer Armaturen-Schließvorrichtung der eingangs genannten Art vorgeschlagen, dass der Not-Antrieb aus mindestens zwei voneinander getrennten Energiespeichereinheiten mit jeweils mindestens einem Akkumulator gespeist oder speisbar ist, wobei jede Energiespeichereinheit jeweils eine Ladeelektronik aufweist. Von Vorteil ist dabei, dass eine Redundanz gebildet ist, durch welche selbst bei Ausfall einer Energiespeichereinheit immer noch Antriebsenergie zum Antrieb des Not-Antriebs bei einem Ausfall oder einer Unterbrechung des Normalbetriebs bereitstellbar ist. Die Energiespeichereinheiten sind somit getrennt oder unabhängig voneinander aufladbar. Somit ist die erfindungsgemäße Armarturen-Schließvorrichtung auch mit elektrisch betriebenen Stellantrieben kombinierbar, wobei hohe sicherheitsgerichtete Anforderungen durch die Redundanz erfüllbar sind.

Bei der Ausgestaltung der Erfindung ist vorgesehen, dass jede Ladeelektronik zumindest in einem Wartungsladezyklus und in einem Erhaltungsladezyklus betreibbar ist. Wartungsladezyklus und Erhaltungsladezyklus sind hierbei zwei unter schiedliche, an sich bekannte Arten von Ladezyklen für Akkumulatoren, also für eine oder mehrere zusammengesetzte, aufladbare galvanische Zellen. Von Vorteil ist dabei, dass eine Funktionsprüfung der angeschlossenen Akkumulatoren in einem Wartungsladezyklus von Zeit zu Zeit durchführbar ist. Von Vorteil ist dabei weiter, dass die Akkumulatoren beispielsweise außerhalb des Wartungsladezyklus in einem Bereitschaftszustand haltbar sind, indem der zugehörige Akkumulator in einem Erhaltungsladezyklus der Ladeelektronik geladen wird. Die Ladeelektronik erlaubt somit, je nach Bedarf für den mindestens einen angeschlossenen Akkumulator die Art des Ladezyklus vorzugeben, vorzugsweise unabhängig von der momentan für die anderen Akkumulatoren eingestellten Art des Ladezyklus.

Bei einer Ausgestaltung der Erfindung kann vorgesehen sein, dass wenigstens eine Energiespeichereinheit mehr als einen Akkumulator aufweist und die zugehörige Ladeelektronik so eingerichtet ist, dass ein Akkumulator im Wartungsladezyklus betreibbar und ein weiterer Akkumulator zum gleichen Zeitpunkt im Erhaltungsladezyklus betreibbar ist. Somit ist einfach erreichbar, dass wenigstens ein Akkumulator der Energiespeichereinheit selbst dann verfügbar ist, wenn Teile der Energiespeichereinheit einer Wartung unterzogen werden. Hierdurch kann die sicherheitstechnische Stufe erhöht werden, da die Energiespeichereinheit auch während einer teilweisen Wartung einsatzbereit bleibt.

Bei einer Ausgestaltung der Erfindung kann vorgesehen sein, dass wenigstens eine Energiespeichereinheit, beispielsweise die bereits erwähnte Energiespeichereinheit, mehr als einen Akkumulator aufweist und die zugehörige Ladeelektronik so eingerichtet ist, dass zu jedem Zeitpunkt höchstens ein Akkumulator im Wartungsladezyklus betreibbar oder betrieben ist. Von Vorteil ist dabei, dass eine Überlastung eines Netzes vermeidbar ist, indem Bedienzustände, in welchen zwei Akkumulatoren im Wartungsladezyklus vergleichsweise hohe Ladeströme beziehen, vermeidbar sind.

Bei einer Ausgestaltung der Erfindung kann vorgesehen sein, dass wenigstens eine Energiespeichereinheit, beispielsweise die bereits erwähnte Energiespeichereinheit, mehr als einen Akkumulator aufweist und die zugehörige Ladeelektronik zu einer sukzessiven Durchführung von Wartungsladezyklen an den Akkumulatoren der Energiespeichereinheit eingerichtet ist. Somit sind die Akkumulatoren einer Energiespeichereinheit in regelmäßigen Abläufen wiederkehrend überprüfbar. Hierzu kann beispielsweise ein Zeitgeber oder Timer ausgebildet sein, welcher einen Wechsel der Ladezyklenarten nach einer vorgegebenen Abfolge initiiert.

Bei einer Ausgestaltung der Erfindung kann vorgesehen sein, dass eine Ladeelektronik einer Energiespeichereinheit mit einer Ladeelektronik einer weiteren Energiespeichereinheit über eine Signal- und/oder Steuerverbindung derart gekoppelt ist, dass nicht in beiden Energiespeichereinheiten gleichzeitig ein Akkumulator im Wartungsladezyklus betreibbar ist. Von Vorteil ist dabei, dass hohe Gesamtladeströme vermeidbar sind.

Bei einer Ausgestaltung der Erfindung kann vorgesehen sein, dass eine Arbitriervorrichtung zu einer Generierung eines Sperrsignals eingerichtet ist, wenn ein Akkumulator im Wartungsladezyklus betrieben ist. Arbitriervorrichtungen sind an sich bekannt, beispielsweise zur Auflösung von Konflikten oder Kollisionen bei Kommunikationsteilnehmern. Von Vorteil ist dabei, dass auf einfache Weise realisierbar ist, dass nicht zwei Akkumulatoren gleichzeitig im Wartungsladezyklus betrieben werden. Die Arbitriervorrichtung kann hierbei als Teil der erwähnten Signal- und/oder Steuerverbindung ausgebildet sein.

Bei einer Ausgestaltung der Erfindung kann vorgesehen sein, dass eine Arbitriervorrichtung, beispielsweise die bereits erwähnte Arbitriervorrichtung, zu einer Generierung eines Freigabesignals eingerichtet ist, wenn kein Akkumulator in Wartungsladezyklus betrieben ist. Von Vorteil ist dabei, dass für die Ladeelektroniken einfach erkennbar ist, ob ein Wechsel in den Wartungsladezyklus für einen Akkumulator momentan möglich ist.

Allgemein kann vorgesehen sein, dass jede Ladeelektronik zur Freigabeanfrage an eine Arbitriervorrichtung, beispielsweise die bereits erwähnte Arbitriervorrichtung, vor einem Wechsel eines zugehörigen Akkumulators in den Wartungsladezyklus eingerichtet ist. Somit ist auf einfache Weise vermeidbar, dass ein Akkumulator in den Wartungsladezyklus wechselt, wenn bereits ein anderer Akkumulator im Wartungsladezyklus betrieben wird. Die Ladeelektronik kann hierbei zu einer Generierung und/oder Versendung der Freigabeanfrage und/oder zu einer Auswertung einer Reaktion auf die Freigabeanfrage, beispielsweise in Form eines Freigabesignals, eingerichtet sein.

Bei einer Ausgestaltung der Erfindung kann vorgesehen sein, dass an einem Versorgungsausgang jeder Energiespeichereinheit eine Sperrdiode angeordnet ist. Bevorzugt ist die Sperrdiode jeweils mit einer Sperrrichtung so angeordnet, dass ein Aufladen der Energiespeichereinheit über den Versorgungsausgang verhindert ist. Somit können mehrere Energiespeichereinheiten mit ihren Versorgungsausgängen zusammengeführt werden, ohne dass sich eine Energiespeichereinheit in eine andere Energiespeichereinheit entladen kann. Dies ermöglicht auf einfache Weise die redundante Bereitstellung von Energiespeichereinheiten zur Versorgung eines Not-Antriebs.

Bei einer Ausgestaltung der Erfindung kann vorgesehen sein, dass wenigstens eine Energiespeichereinheit mehr als einen Akkumulator aufweist und an einem Akkumulatorsausgang jedes zugehörigen Akkumulators jeweils eine Sperrdiode angeordnet ist. Bevorzugt ist die Sperrperiode jeweils mit einer Sperrrichtung so angeordnet, dass ein Aufladen des zugehörigen Akkumulators über die Sperrdiode verhindert ist. Von Vorteil ist dabei, dass ein Entladen eines Akkumulators in einen weiteren Akkumulator derselben Energiespeichereinheit über den zugehörigen Akkumulatorausgang des weiteren Akkumulators verhindert ist. Somit können die Akkumulatoren einer Energiespeichereinheit auf einfache Weise mit ihren Akkumulatorausgängen zu einem Versorgungsausgang der Energiespeichereinheit geführt werden.

Bei einer Ausgestaltung der Erfindung kann vorgesehen sein, dass jeder Akkumulator wahlweise mit einem Entladeanschluss, einem Erhaltungsladeanschluss und einem Wartungsladeanschluss elektrisch verbindbar ist. Der Entladeausschluss kann hierbei an den erwähnten Versorgungsausgang angeschlossen oder anschließbar sein. Die elektrische Verbindung kann hierbei durch Relais oder Halbleiterschalter oder andere Schaltmittel herstellbar sein. Von Vorteil ist dabei, dass die Akkumulatoren zur Versorgung des bereits erwähnten Not-Antriebs schaltbar und im Betrieb in einem Erhaltungsladezyklus und in einem Wartungsladezyklus betreibbar sind.

Eine bevorzugte Anwendung der Erfindung stellt den Fall einer Armaturen-Stellanordnung dar, die einen Stellantrieb und eine erfindungsgemäße Armaturen-Schließvorrichtung, insbesondere wie zuvor beschrieben und/oder nach einem der auf eine Armaturen-Schließvorrichtung gerichteten Schutzansprüche, hat, wobei mit dem Stellantrieb die Eingangswelle im Normalbetrieb antreibbar ist.

Zur Lösung der genannten Aufgabe wird erfindungsgemäß bei einem Verfahren der eingangs beschriebenen Art vorgeschlagen, dass der Not-Antrieb aus wenigstens zwei voneinander getrennten Energiespeichereinheiten speisbar ist und/oder gespeist wird, dass die Energiespeichereinheiten jeweils wenigstens einen Akkumulator aufweisen und dass wenigstens ein Akkumulator in einem Erhaltungsladezyklus betrieben wird, während ein weiterer Akkumulator in einem Wartungsladezyklus betrieben wird. Von Vorteil ist dabei, dass die Armaturen-Schließvorrichtung auch dann in Bereitschaft haltbar ist, wenn ein Akkumulator in einem Wartungsladezyklus zur Funktionsprüfung oder zu anderen Zwecken betrieben wird. Hierdurch ist die Verfügbarkeit des Not-Antriebs erhöhbar, wodurch eine sicherheitsgerichtete Funktion des elektrisch betreibbaren Not-Antriebs realisierbar ist.

Bei einer Ausgestaltung der Erfindung kann vorgesehen sein, dass, wenn ein Akkumulator im Wartungsladezyklus betrieben wird, ein Betrieb im Wartungsladezyklus für alle weiteren Akkumulatoren der zugehörigen Energiespeichereinheit elektronisch gesperrt wird. Von Vorteil ist dabei, dass ein zu hoher Ladestrom, der sich durch eine gleichzeitige Ausführung von Wartungsladezyklen für zwei Akkumulatoren einer Energiespeichereinheit ergeben würde, vermeidbar ist. Alternativ oder zusätzlich kann vorgesehen sein, dass, wenn ein Akkumulator im Wartungsladezyklus betrieben wird, der Betrieb im Wartungsladezyklus für alle weiteren Akkumulatoren der Armaturen-Schließvorrichtung elektronisch gesperrt wird. Somit ist der maximale Ladestrom für die Armaturen-Schließvorrichtung als Ganzes begrenzbar.

Bei einer Ausgestaltung der Erfindung kann vorgesehen sein, dass vor einem Wechsel eines Akkumulators in den Wartungsladezyklus in einem Arbitrierungsverfahren geprüft wird, ob momentan ein weiterer Akkumulator im Wartungsladezyklus betrieben wird. Ein Arbitrierungsverfahren stellt eine einfache Möglichkeit dar, das gleichzeitige Wechseln zweier oder mehrerer Akkumulatoren in den jeweiligen Wartungsladezyklus zu vermeiden. Hierbei kann beispielsweise die bereits beschriebene Arbitriervorrichtung verwendet werden.

Bei einer Ausgestaltung der Erfindung kann vorgesehen sein, dass, bevor ein Akkumulator im Wartungsladezyklus betrieben wird, auf ein Freigabesignal gewartet wird. Alternativ oder zusätzlich kann auf ein Ende eines Sperrsignals gewartet werden. Von Vorteil ist dabei, dass ein Wechsel eines Akkumulators in den Wartungsladezyklus verhinderbar ist, solange wenigstens ein weiterer Akkumulator im Wartungsladezyklus betrieben wird. Somit sind hohe Ströme aufgrund von gleichzeitig ausgeführten Wartungsladezyklen vermeidbar.

Bei einer Ausgestaltung der Erfindung kann vorgesehen sein, dass ein Sperrsignal, beispielsweise das bereits erwähnte Sperrsignal, generiert wird, wenn ein Akkumulator im Wartungsladezyklus betrieben wird. Von Vorteil ist dabei, dass für alle Ladegeräte signalisierbar ist, dass ein Wechsel in den Wartungsladezyklus momentan gesperrt ist.

Das Freigabesignal und/oder das Sperrsignal kann/können hierbei beispielsweise von einer Arbitriervorrichtung und/oder den jeweiligen Ladeelektroniken selbst generiert werden.

Bei einer Ausgestaltung der Erfindung kann vorgesehen sein, dass die Akkumulatoren einer Energiespeichereinheit sukzessive im Wartungsladezyklus betrieben werden. Von Vorteil ist dabei, dass eine regelmäßige Funktionsprüfung für alle Akkumulatoren der Energiespeichereinheit durchführbar ist.

Hierbei kann ein Zeitgeber oder Timer jeweils einen Wechsel der Art des Ladezyklus initiieren.

Allgemein kann vorgesehen sein, dass im Wartungsladezyklus eine Kapazität des jeweiligen Akkumulators gemessen wird. Diese Messung ist beispielsweise durch eine Messung des Ladestroms und/oder eine Messung der Zeitspanne bis zum Erreichen eines voll aufgeladenen Zustandes gemessen werden. Genauere Ergebnisse lassen sich erreichen, wenn die Kapazität durch eine Messung des Entladestroms und/oder eine Messung der Zeitspanne bis zum Erreichen eines voll entladenen Zustandes, jeweils ausgehend von einem bekannten Ladungszustand oder einem voll aufgeladenen Zustand, gemessen wird/werden.

Bei einer Ausgestaltung der Erfindung kann vorgesehen sein, dass im Wartungsladezyklus ein Akkumulator entladen wird. Besonders günstig ist es, wenn die Entladung vollständig erfolgt. Von Vorteil ist dabei, dass ein definierter Ausgangszustand zum Laden des Akkumulators gegeben ist, um dessen Funktionsfähigkeit zu prüfen.

Es kann vorgesehen sein, dass ein Fehlersignal ausgegeben wird, wenn eine gemessene Kapazität, beispielsweise die bereits erwähnte Kapazität, eines Akkumulators, beispielsweise des bereits erwähnten Akkumulators, unter einem Schwellwert liegt.

Von Vorteil ist dabei, dass auf einfache Weise eine Funktionsprüfung durchführbar ist.

Besonders günstig ist es, wenn das erfindungsgemäße Verfahren mit einer erfindungsgemäßen Armaturen-Schließvorrichtung, insbesondere wie zuvor beschrieben und/oder nach einem der auf einer Armaturen-Schließvorrichtung gerichteten Schutzansprüche, ausgeführt wird. Günstig ist auch, wenn die erfindungsgemäße Armaturen-Schließvorrichtung Mittel zur Ausführung eines erfindungsgemäßen Verfahrens, insbesondere wie zuvor beschrieben und/oder nach einem der auf eine Armaturen-Schließvorrichtung gerichteten Schutzansprüche, ausgebildet sind.

Die Erfindung wird nun anhand von Ausführungsbeispielen näher beschrieben, ist jedoch nicht auf diese Ausführungsbeispiele beschränkt. Weitere Ausführungsbeispiele ergeben sich durch Kombination der Merkmale einzelner oder mehrerer Schutzansprüche untereinander und/oder mit einzelnen oder mehreren Merkmalen der Ausführungsbeispiele.

Es zeigt,
- Fig. 1: eine erfindungsgemäße Armaturen-Schließvorrichtung in einer Armaturen-Stellanordnung, wobei die Armaturen-Schließvorrichtung zwei separate Not-Antriebe aufweist,
- Fig. 2: eine weitere Armaturen-Stellanordnung mit einer weiteren erfindungsgemäßen Armaturen-Schließvorrichtung mit einem Not-Antrieb,
- Fig. 3: eine weitere Armaturen-Stellanordnung mit einer weiteren erfindungsgemäßen Armaturen-Schließvorrichtung mit Arbitriervorrichtung,
- Fig. 4: eine Ladeelektronik einer erfindungsgemäßen Armaturen-Schließvorrichtung,
- Fig. 5: eine weitere Ladeelektronik einer erfindungsgemäßen Armaturen-Schließvorrichtung,
- Fig. 6: einen Schaltzustand einer Energiespeichereinheit einer erfindungsgemäßen Armaturen-Schließvorrichtung,
- Fig. 7: einen weiteren Schaltzustand einer Energiespeichereinheit gemäß Fig. 6,
- Fig. 8: einen dritten Schaltzustand einer Energiespeichereinheit einer erfindungsgemäßen Armaturen-Schließvorrichtung und
- Fig. 9: einen Ablaufplan eines erfindungsgemäßen Verfahrens.

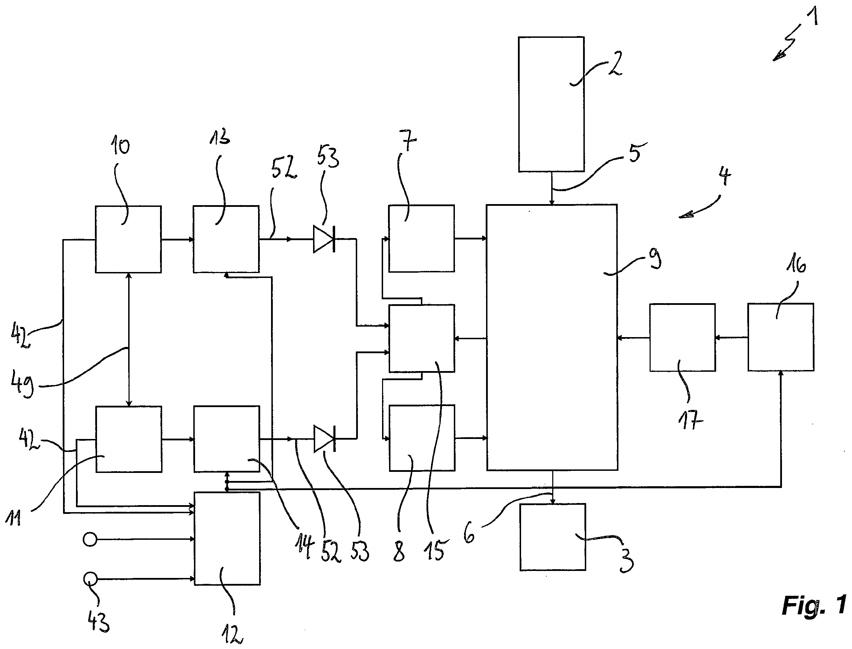

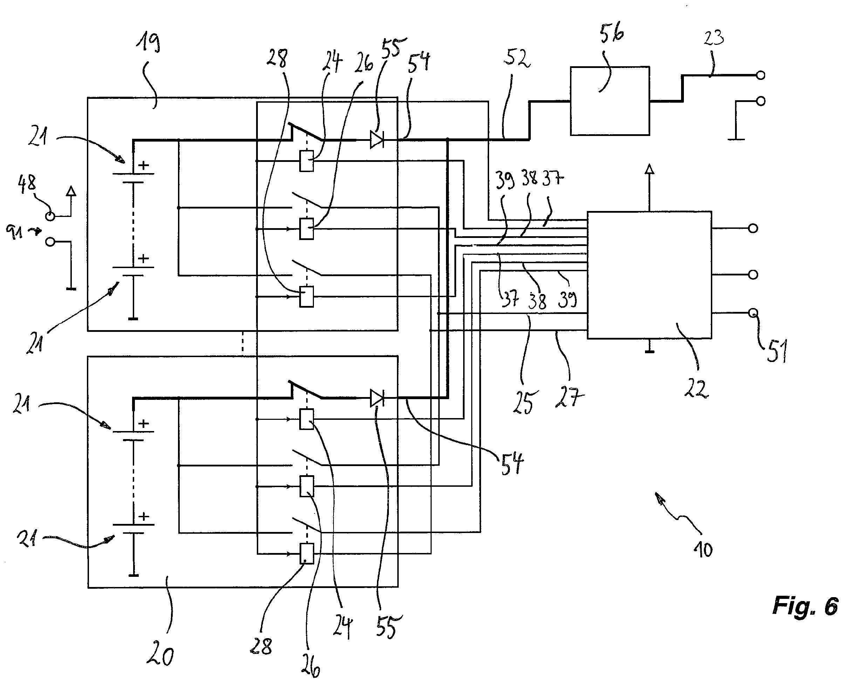

Fig. 1 zeigt in einer stark vereinfachten Blockdarstellung zur Erläuterung des erfinderischen Prinzips eine im Ganzen mit 1 bezeichnete Armaturen-Stellanordnung. Die Armaturen-Stellanordnung 1 hat in an sich bekannter Weise einen Stellantrieb 2. Der Stellantrieb 2 ist elektrisch, hydraulisch, pneumatisch oder auf andere Weise betreibbar. Bevorzugt ist ein elektrischer Betrieb, bei welchem der Stellantrieb 2 aus einem Netz 91 (vergleiche Fig. 6 bis 8) versorgt ist.

Der Stellantrieb 2 gemäß Fig. 1 dient zur Betätigung einer Armatur 3, die beispielsweise ein Ventil sein kann.

Zwischen dem Stellantrieb 2 und der Armatur 3 ist eine erfindungsgemäße Armaturen-Schließvorrichtung 4 angeordnet.

Die Armaturen-Schließvorrichtung 4 dient zum Betätigen, beispielsweise zum Schließen oder Öffnen, der Armatur 3 bei einer Betriebsstörung oder einem Netzausfall.

Hierzu ist die Armaturen-Schließvorrichtung 4 mit einer Eingangswelle 5 und einer Abtriebswelle 6 versehen, die miteinander gekoppelt sind, damit ein Kraftfluss von der Eingangswelle 5 zu der Abtriebswelle 6 übertragbar ist.

Die Eingangswelle 5 wird von dem Stellantrieb 2 angetrieben. Hierbei ist verhindert, beispielsweise durch ein nicht weiter dargestelltes, an sich bekanntes selbsthemmendes Getriebe oder durch eine Bremse oder auf andere Weise, dass der Stellantrieb 2 über die Eingangswelle 5 antreibbar ist.

Die Abtriebswelle 6 ist für den Betrieb mit der Armatur 3 wirkverbunden.

Die Armaturen-Schließvorrichtung 4 weist einen Not-Antrieb 7 auf, mit welchem die Abtriebswelle 6 bei Ausfall des Stellantriebs 2 in einer Gefahrensituation betätigbar oder antreibbar ist, um die Abtriebswelle 6 aus der Gebrauchsposition in eine definierte Endposition, beispielsweise eine geschlossene oder eine geöffnete Armatur 3, zu überführen.

Hierzu ist zwischen der Eingangswelle 5 und der Abtriebswelle 6 in an sich bekannter Weise ein nicht weiter dargestelltes Überlagerungsgetriebe 9 angeordnet, über welches der Not-Antrieb 7 an die Abtriebswelle angekoppelt ist.

Zur Bereitstellung einer Redundanz und zur Erhöhung einer sicherheitsgerichteten Stufe der Armaturen-Schließvorrichtung 4 ist ein zweiter Not-Antrieb 8 vorgesehen, welcher parallel zu dem Not-Antrieb 7 arbeitet.

Die Not-Antriebe 7, 8 sind aus einer ersten Energiespeichereinheit 10 und einer zweiten Energiespeichereinheit 11 speisbar und im Betrieb gespeist.

Die zweite Energiespeichereinheit 11 ist hierbei separat von der ersten Energiespeichereinheit 10 ausgebildet und unabhängig von dieser betreibbar, um eine Redundanz zu schaffen.

Eine an sich bekannte Ansteuerungselektronik 12 ist zur Betätigung von Einschaltvorrichtungen 13, 14 eingerichtet, mit denen die zwei voneinander getrennten Energiespeichereinheiten 10, 11 zur Versorgung der Not-Antriebe 7, 8 zuschaltbar sind.

Eine Endlagenschaltvorrichtung 15 wird von dem Überlagerungsgetriebe 9 oder der Abtriebswelle 6 angesteuert und betätigt, wenn die gewünschte Endposition erreicht ist, um eine Speisung der Not-Antriebe 7, 8 aus den Energiespeichereinheiten 10, 11 zu unterbrechen.

Die Einschaltvorrichtungen 13, 14 und/oder die Endlagenschaltvorrichtung 15 kann/können beispielsweise als elektromagnetische Schalter und/oder mit Halbleiterelementen gebildet sein.

Es ist günstig, die Endlagenschaltvorrichtung 15 als Öffner auszubilden.

Die Ansteuerungselektronik 12 steuert in an sich bekannter Weise eine Bremsen-Ausschaltelektronik 16 an, mit welcher eine Haltebremse 17 betätigbar, beispielsweise lüftbar oder schließbar ist.

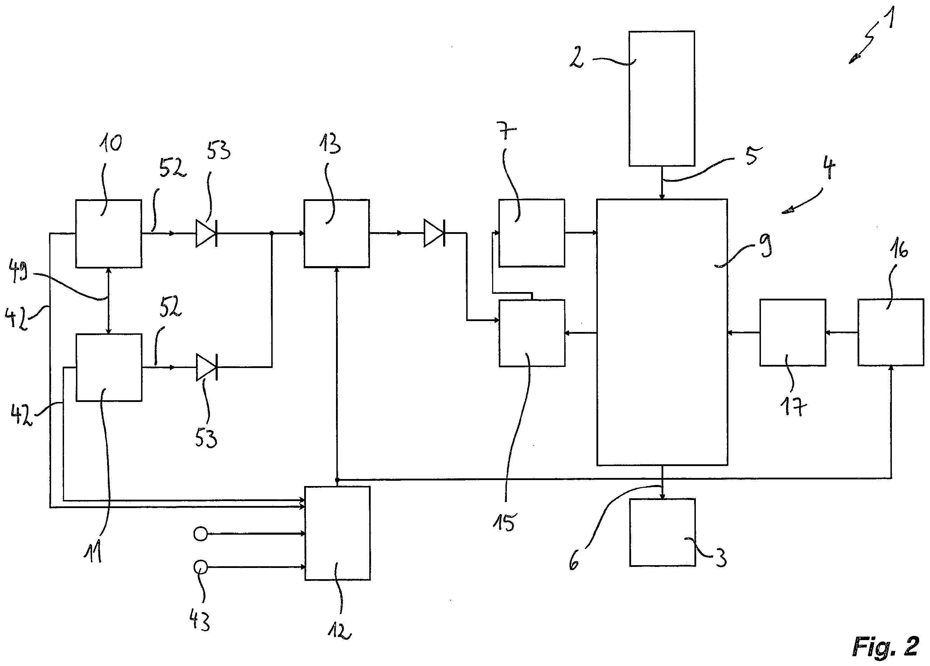

Fig. 2 zeigt ein weiteres erfindungsgemäßes Ausführungsbeispiel mit einer Armaturen-Stellanordnung 1 und einer erfindungsgemäßen Armaturen-Schließvorrichtung 4. Konstruktiv und/oder funktionell zu dem Ausführungsbeispiel gemäß Fig. 1 gleichartige oder identische Baugruppen und Funktionseinheiten sind mit denselben Bezugszeichen bezeichnet und nicht noch einmal gesondert beschrieben. Die Ausführungen zu Fig. 1 gelten daher zu Fig. 2 entsprechend.

Das Ausführungsbeispiel gemäß Fig. 2 unterscheidet sich von dem Ausführungsbeispiel gemäß Fig. 1 zunächst dadurch, dass nur ein Not-Antrieb 7 ausgebildet ist.

Das Ausführungsbeispiel gemäß Fig. 2 unterscheidet sich von dem Ausführungsbeispiel gemäß Fig. 1 weiter dadurch, dass die zwei voneinander getrennten Energiespeichereinheiten 10, 11 auf eine Einschaltvorrichtung 13 zusammengeführt sind. Somit ist eine Speisung des Not-Antriebs 7 für beide Energiespeichereinheiten 10, 11 mit einem Schaltvorgang der Einschaltvorrichtung 13 zuschaltbar und mit einem Schaltvorgang der Endlagenschaltvorrichtung 15 abschaltbar.

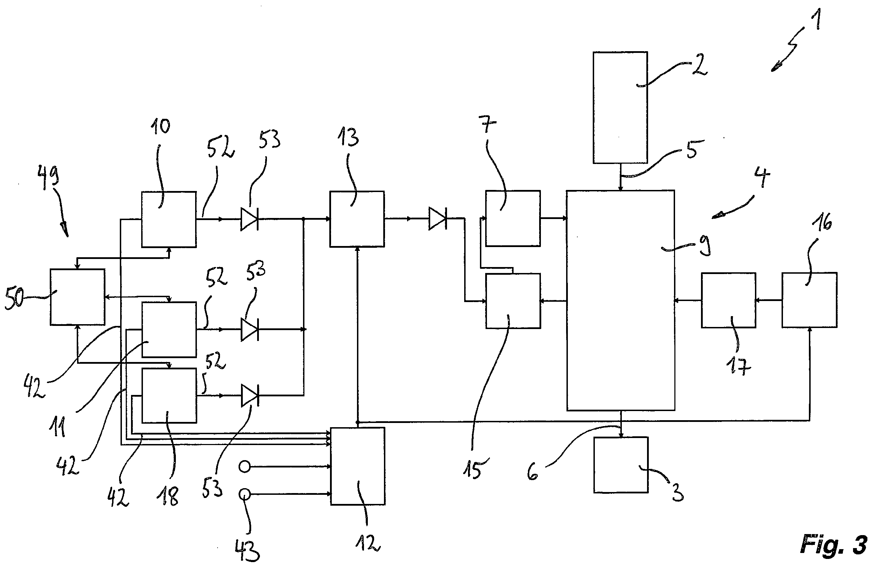

Fig. 3 zeigt ein weiteres erfindungsgemäßes Ausführungsbeispiel einer Armaturen-Schließvorrichtung 4. Funktionell und/oder konstruktiv zu den vorangehenden Ausführungsbeispielen gemäß Fig. 1 oder Fig. 2 gleichartige oder identische Bauteile und Funktionseinheiten sind wieder mit denselben Bezugszeichen bezeichnet und nicht noch einmal gesondert beschrieben. Die Ausführungen zu den Fig. 1 und 2 gelten daher zu Fig. 3 entsprechend.

Das Ausführungsbeispiel gemäß Fig. 3 unterscheidet sich von den vorangehenden Ausführungsbeispielen dadurch, dass eine dritte Energiespeichereinheit 18 ausgebildet ist, aus welcher der Not-Antrieb 7 speisbar ist und nach entsprechender Beschaltung der Einschaltvorrichtung 13 und der Endlagenschaltvorrichtung 15 gespeist wird. Bei weiteren Ausführungsbeispielen sind mehr als drei Energiespeichereinheiten ausgebildet.

Die drei separat voneinander ausgebildeten Energiespeichereinheiten 10, 11 und 18 sind zusammengeführt auf die Einschaltvorrichtung 13.

Jede der Energiespeichereinheiten 10, 11, 18 in den Fig. 1 bis 3 ist intern gemäß Fig. 6 aufgebaut. Fig. 6 zeigt diesen Aufbau für die Energiespeichereinheit 10 beispielhaft.

Die Energiespeichereinheit 10 - und analog die Energiespeichereinheiten 11, 18 - weist einen ersten Akkumulator 19 und einen zweiten Akkumulator 20 auf. Zur Vereinfachung der Darstellung sind in Fig. 6 nur zwei Akkumulatoren 19, 20 dargestellt. Bei weiteren Ausführungsbeispielen können jedoch mehr als zwei, beispielsweise drei, vier, fünf oder mehr als fünf, Akkumulatoren in jeder Energiespeichereinheit 10, 11, 18 ausgebildet sein.

Die Akkumulatoren 19, 20 sind jeweils aus mindestens einer galavanischen Zelle 21 gebildet, um beispielsweise eine gewünschte Versorgungsspannung und/oder eine gewünschte Ladekapazität zu erreichen. Häufig sind so viele galvanische Zellen 21 vorhanden, dass eine gewünschte Leistung bereitstellbar ist.

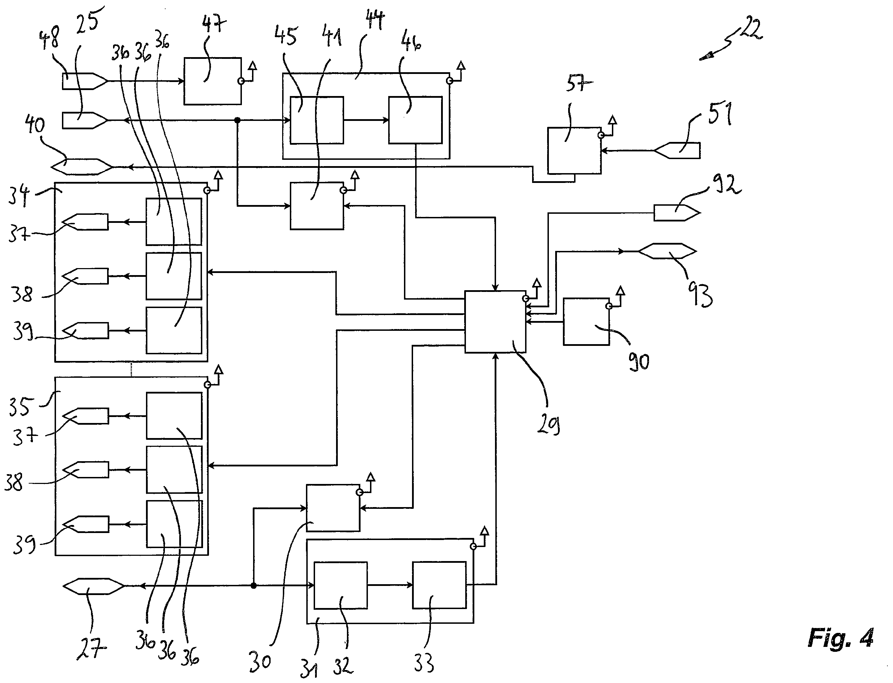

Jede Energiespeichereinheit 10, 11, 18 weist weiter eine Ladeelektronik 22 auf, die beispielhaft in schematisierter Form in Fig. 4 gezeigt ist. Die Akkumulatoren 19, 20 sind jeweils an dem Versorgungsausgang 52 mit einem Entladeanschluss 23 ausgerüstet oder verbunden, über den der Not-Antrieb 7 und gegebenenfalls der Not-Antrieb 8 versorgbar ist/sind.

Hierzu ist der Entladeanschluss 23 mit einer Schalteinheit 24 mit dem Akkumulator 19 und insbesondere dessen galvanischer Zellen 21 verbindbar.

Für jeden Akkumulator 19, 20 an der Ladeelektronik 22 ist ein Wartungsladeanschluss 25 ausgebildet, welcher über eine jeweilige Wartungslade-Schalteinheit 26 mit den einzelnen Akkumulatoren 19, 20 und insbesondere deren galvanischer Zellen 21 elektrisch verbindbar ist.

Die Ladeelektronik 22 weist weiter einen Erhaltungsladeanschluss 27 auf, der über jeweilige Erhaltungslade-Schalteinheiten 28 mit dem jeweiligen Akkumulator 19, 20 und insbesondere dessen galvanischen Zellen 21 elektrisch verbindbar ist.

In der Detailansicht gemäß Fig. 4 ist ersichtlich, dass die Ladeelektronik 22 eine Recheneinheit 29 aufweist, welche zur Ansteuerung oder Aktivierung von Ladezyklen für die Akkumulatoren 19, 20 eingerichtet ist.

Die Ladeelektronik 22 hat eine Erhaltungsladungsschaltung 30, mit welcher ein Erhaltungsladezyklus betreibbar ist.

Die von der Erhaltungsladungsschaltung 30 erzeugte Erhaltungsladungsspannung liegt am Erhaltungsladeanschluss an.

Mit der Messvorrichtung 31 ist die Batteriespannung während des Erhaltungsladezyklus messbar und zur Regelung der Erhaltungsladungsspannung verwendbar. Die Messvorrichtung 31 hat hierzu eine Messpegelanpassung 32 und Analog-Digital-Wandlung 33. Das Messsignal wird an die Recheneinheit 29 rückgeführt.

Die Ladeelektronik 22 steuert für jeden Akkumulator 19, 20 separat eine Schalteransteuerung 34, 35 - hier im Beispiel eine Relaisansteuerung - an.

Die Schalteransteuerung 34 ist somit zur Ansteuerung der Schalteinheit 24, der Wartungslade-Schalteinheit 26 und der Erhaltungslade-Schalteinheit 28 des Akkumulators 19 vorgesehen, während die Schalteransteuerung 35 für die Schalteinheit 24, die Wartungslade-Schalteinheit 26 und die Erhaltungslade-Schalteinheit 28 des Akkumulators 19, 20 vorgesehen ist.

Zur Ansteuerung der jeweiligen Schalteinheit 24, 26, 28 weisen die Schaltansteuerungen 34, 35 entsprechende Treiber 36 auf. Die Kontakte 37 sind zu der Schalteinheit 24 des jeweiligen Akkumulators 19, 29 geführt. Die Kontakte 38 sind zu der jeweiligen Wartungslade-Schalteinheit 26 des jeweiligen Akkumulators 19 oder 20 geführt. Die Kontakte 39 sind zu der Erhaltungslade-Schalteinheit 28 des jeweiligen Akkumulators 19, 20 geführt.

Die Schaltsignale der Kontakte 37, 38, 39 sind über eine Rückführung 40 an die Ladeelektronik 22 als gemeinsames Potenzial rückgeführt.

Bei Betätigung der Kontakte 39 wird somit die Spannung am Erhaltungsladeanschluss 27 an die galvanischen Zellen 21 des jeweiligen Akkumulators angelegt. Somit wird ein Erhaltungsladezyklus für den jeweiligen Akkumulator 19, 20 ausgeführt.

Die Ladeelektronik 22 verfügt ferner über eine Entlade-/Lade-Schaltung 41, mit welcher ein Wartungsladezyklus durchführbar ist.

Hierzu werden am Wartungsladeanschluss 25 angeschlossene Akkumulatoren 19, 20 zunächst vollständig geladen, um anschließend wieder entladen zu werden. Die in diesem Entladevorgang ermittelte eine Ladekapazität des angeschlossenen Akkumulators 19, 20 wird mit einem Schwellwert verglichen. Liegt die gemessene Kapazität des angeschlossenen Akkumulators 19, 20 unterhalb dieses Schwellwertes, so generiert die Recheneinheit 29 ein Fehlersignal. Dieses Fehlersignal wird über eine jeweilige Rückmeldeleitung 42 an die Ansteuerungselektronik 12 rückgemeldet.

Die Ansteuerungselektronik 12 gibt in Reaktion eine Fehlerinformation über einen Ausgang 43 aus.

Durch Ansteuerung des Treibers 36 zu den Kontakten 38 kann somit der jeweilige Akkumulator 19, 20 in einem Wartungsladezyklus betrieben werden.

Durch Ansteuerung des Treibers 36 zu den Kontakten 37 kann eine Versorgung der Not-Antriebe 7, 8 aus den Energiespeichereinheiten 10, 11, 18 freigeschaltet werden.

Die Ladeelektronik 22 und insbesondere die Recheneinheit 29 sind daher dazu eingerichtet, die Energiespeichereinheiten 10, 11, 18 unabhängig voneinander im Wartungsladezyklus, im Erhaltungsladezyklus oder zur Versorgung der Not-Antriebe 7, 8 zu betreiben.

Die Schalteransteuerungen 34, 35 sind mit an sich bekannten Schalterkontrollen, hier Relaiskontrollen, ausgerüstet, um die Treiber 36 in ihrer Funktion zu überwachen.

Aus der Zeichnung ist ersichtlich, dass die Ansteuerung durch die Recheneinheit 29 so erfolgen kann, dass beispielsweise der Akkumulator 19 durch Betätigung der Wartungslade-Schalteinheit 26 in einem Wartungsladezyklus betreibbar ist, während gleichzeitig der Akkumulator 20 durch Betätigung der Erhaltungslade-Schalteinheit 28 im Erhaltungsladezyklus betreibbar ist.

Die Recheneinheit 29 koordiniert hierbei die Schaltzustände derart, dass ein gleichzeitiges Betreiben der Akkumulatoren 19 und 20 jeweils im Wartungsladezyklus gesperrt ist.

Zur Überwachung des Wartungsladezyklus ist eine Messvorrichtung 44 vorhanden, mit welcher eine Akkumulatorspannung des jeweiligen Akkumulators 19, 20 messbar ist. Die Messvorrichtung 44 hat in an sich bekannter Weise eine Messpegelanpassung 45 und eine Analog-Digital-Wandlung 46. Messsignale der Messvorrichtung 44 werden zur weiteren Verarbeitung und insbesondere zur Steuerung des Wartungsladezyklus an die Recheneinheit 29 geführt.

Die dargestellten Blöcke der Ladeelektronik 22 werden durch eine Spannungsstabilisierung 47 gespeist, die aus einem Versorgungsspannungsanschluss 47 versorgt wird.

Die Recheneinheit 29 ist so eingerichtet, dass die Kontakte 38 zu den einzelnen Akkumulatoren 19, 20 nacheinander aktiviert werden, um diese Akkumulatoren 19, 20 sukzessive in Wartungsladezyklen zu betreiben.

Um zu verhindern, dass ein Akkumulator 19, 20 in einer Energiespeichereinheit 10 und gleichzeitig ein anderer Akkumulator 19, 20 in einer weiteren Energiespeichereinheit 11, 18 im Wartungsladezyklus betrieben werden, ist eine Signal- und/oder Steuerverbindung 49 vorgesehen, welche die jeweiligen Ladeelektroniken 20 miteinander entsprechend koppelt.

Bei dem Ausführungsbeispiel gemäß Fig. 3 weist diese Signal- und/oder Steuerverbindung 49 eine Arbitriervorrichtung 50 auf. Die Ladeelektroniken 22 der jeweiligen Energiespeichereinheit 10, 11, 18 senden hierbei Freigabesignale an die Arbitriervorrichtung 50, wenn ein Akkumulator 19, 20 in der betreffenden Energiespeichereinheit 10, 11, 18 den Wartungsladezyklus beendet hat. Die Ladeelektroniken 22 generieren außerdem ein Sperrsignal und übertragen dieses an die Arbitriervorrichtung 50, wenn ein angeschlossener Akkumulator 19, 20 der jeweiligen Energiespeichereinheit 10, 11, 18 in den Wartungsladezyklus übergeht bzw. in dem Wartungsladezyklus betrieben wird.

Die Ladeelektroniken 22 der Energiespeichereinheiten 10, 11, 18 senden somit eine Freigabeanfrage an die Arbitriervorrichtung 50, bevor sie einen Akkumulator 19, 20 in den Wartungsladezyklus versetzen. Der Wechsel in den Wartungsladezyklus erfolgt somit erst, wenn ein Freigabesignal detektiert bzw. die Freigabeanfrage bestätigt bzw. das Sperrsignal beendet ist.

Bei Anliegen eines Notaus-Signals (ESD-Signal 94) an einem Notaus-Eingang 51 steuert die Recheneinheit 29 über die jeweiligen Treiber 36 und die Kontakte 37 die Schalteinheiten 24 an, um eine Versorgung aus den Akkumulatoren 19, 20 für alle verfügbaren Energiespeichereinheiten 10, 11, 18 freizuschalten.

Um zu verhindern, dass hierbei eine Energiespeichereinheit 10, 11, 18 eine andere Energiespeichereinheit 10, 11, 18 auflädt, ist an dem jeweiligen Versorgungsausgang 52 eine Sperrdiode 53 angeordnet.

Die Sperrdioden 53 können bei den Ausführungsbeispielen alternativ in die jeweilige Energiespeichereinheit 10, 11, 18 integriert sein.

Zusätzlich ist an jedem Akkumulatorausgang 54 eines jeden Akkumulators 19, 20 eine Sperrdiode 55 angeordnet, um ein Aufladen eines Akkumulators 19 durch einen anderen Akkumulator 20 insbesondere bei freigebenden Schalteinheiten 24 zu verhindern.

Die Fig. 6 bis 8 zeigen unterschiedliche Schaltzustände der Schalteinheiten 24, 26, 28, wodurch unterschiedliche Betriebszustände der jeweiligen Akkumulatoren 19, 20 eingestellt werden.

Dargestellt ist in den Fig. 6 bis 8 die Energiespeichereinheit 10, für die Energiespeichereinheiten 11, 18 und weiteren Energiespeichereinheiten gilt jedoch das Beschriebene entsprechend.

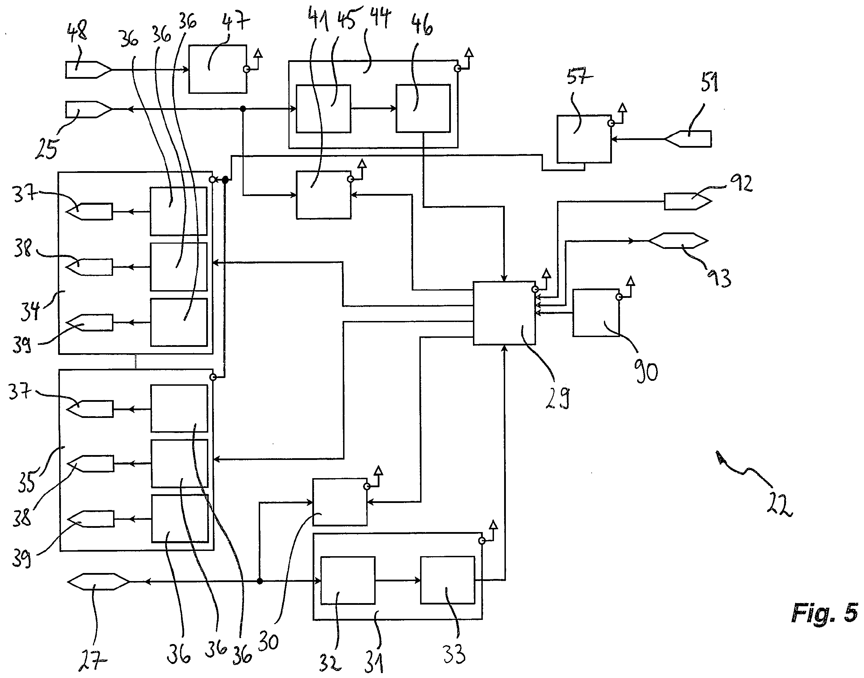

Fig. 5 zeigt eine weitere Ladeelektronik 22, die statt der Ladeelektronik gemäß Fig. 4 bei den Ausführungsbeispielen gemäß Fig. 1 bis Fig. 3 einsetzbar ist. Funktionell und/oder konstruktiv zu der Ladeelektronik 22 gemäß Fig. 4 gleichartige oder identische Bauteile und Funktionseinheiten sind mit denselben Bezugszeichen bezeichnet und nicht noch einmal gesondert beschrieben.

Die Ladeelektronik 22 gemäß Fig. 5 unterscheidet sich von der Ladeelektronik 22 gemäß Fig. 4 zumindest dadurch, dass die Ansteuerung mittels Treibern 36 erfolgt, die zur Ansteuerung von Halbleiterschaltern als Schalteinheiten 24, 26 beziehungsweise 28 ausgebildet und eingerichtet sind, während bei Fig. 4 die Treiber 3b Relais ansteuern. Eine Rückführung 40 kann daher bei dieser Ladeelektronik 22 gem. Fig. 5 entfallen.

Bei den Ladeelektroniken 22 gemäß Fig. 4 und Fig. 5 ist ein Statussignalausgang 92 ausgebildet, über welchen Statussignale ausgebbar sind. An diesem Statussignalausgang 92 ist jeweils eine Rückmeldeleitung 42 angeschlossen.

Weiter ist ein Freigabe- und/oder Sperrausgang 93 an der Recheneinheit 29 ausgebildet, an welche beispielsweise die Signal- und/oder Steuerverbindung 49 angeschlossen ist. Über den Freigabe- und/oder Sperrausgang 93 sind somit Freigabesignale oder Sperrsignale oder Freigabeanfragen ausgebbar. Die Signal- und/oder Steuerverbindung 49 kann hierbei als Busverbindung oder auch als Handshakeleitung ausgebildet und eingerichtet sein.

Fig. 6 zeigt die Situation, bei welcher die Ladeelektronik 22 die Schalteinheiten 24 so ansteuert, dass die galvanischen Zellen 21 auf die jeweiligen Akkumulatorausgänge 54 durchgeschaltet werden. Das Netz 91 ist hierbei spannungslos, beispielsweise durch einen Netzspannungsausfall.

Dies ist beispielsweise der Fall, wenn eine Störung aufgetreten ist.

Die Spannung an den Akkumulatorausgängen 54 wird in diesem Fall zur Versorgung der Notantriebe 7, 8 bzw. nur des Not-Antriebs 7 bei den Ausführungsbeispielen gemäß Fig. 2 und Fig. 3 verwendet. Optional kann hierbei eine Spannungsregelung 56 zwischengeschaltet sein, um einen gewünschten Pegelwert zu erreichen.

In Fig. 6 ist ersichtlich, dass die Ladeelektronik 22 so eingerichtet ist, dass in diesem Fall die Wartungslade-Schalteinheiten 26 und die Erhaltungslade-Schalteinheiten 28 geöffnet sind, um ein Laden der Akkumulatoren 19, 20 zu verhindern.

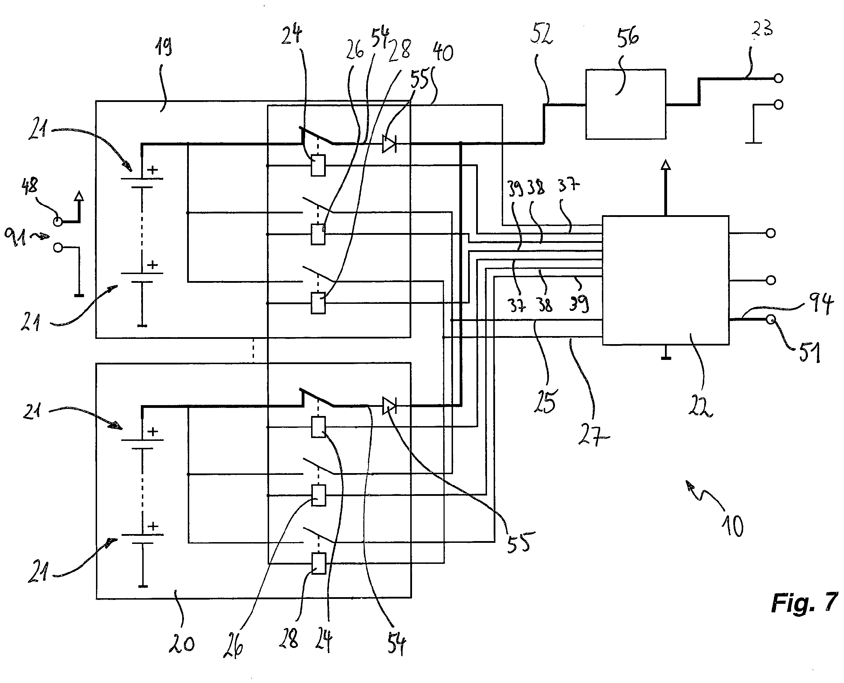

Fig. 7 zeigt die Schaltsituation analog zu Fig. 6 bei bestehender Netzspannung an den Versorgungspannungsanschluss 48, jedoch mit aktivem ESD-Signal 94.

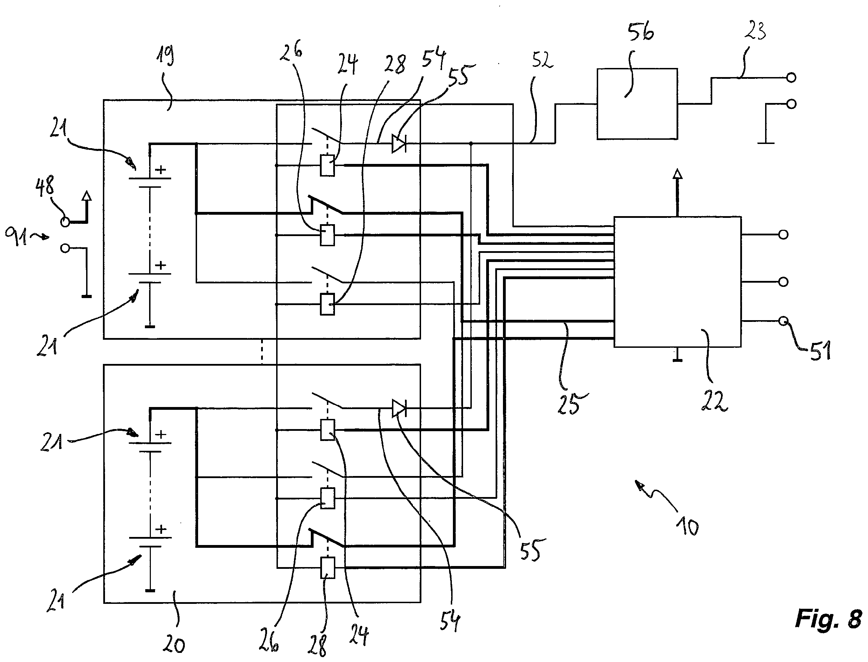

Fig. 8 zeigt beispielhaft einen Schaltzustand bei bestehender Versorgungsspannung am Versorgungsspannungsanschluss 48, wobei der Akkumulator 19 im Wartungsladezyklus und der Akkumulator 20 im Erhaltungsladezyklus betrieben ist.

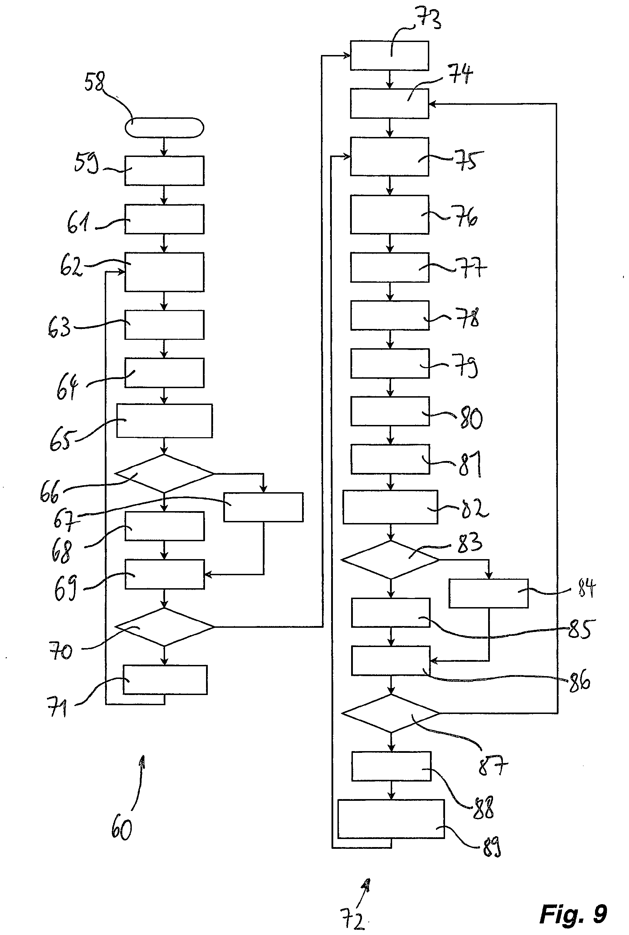

In der Recheneinheit 29 läuft im Betrieb das folgende Verfahren als Programm ab, vergleiche Fig. 9. Ein Zeitgeber 90 bewirkt einen Ablauf des Programms, indem beispielsweise die einzelnen Schritte initiiert werden und/oder indem ein Takt generiert wird.

Eine Notaus-Schaltung 57 erzeugt beim Einschalten einen Reset 58 des Programms. Dies kann beispielsweise beim Einschalten erzeugt oder ausgelöst werden.

Anschließend erfolgt eine Initialisierung 59. Nun werden die einzelnen Akkumulatoren 19, 20 der Energiespeichereinheiten 10, 11, 18 nacheinander, also sukzessive, in einem Aufladeverfahren 60 aufgeladen.

Hierzu wird zunächst ein Zähler in einem Schritt 61 auf eine Nummer des ersten Akkumulators 19, 20 gesetzt. Anschließend wird in einem Auswahlschritt 62 der zugehörige Akkumulator 19, 20 zu der aktuellen Akkumulatornummer für eine Wartungsladung ausgewählt.

In einem nächsten Schritt 63 wird ein Sperrsignal generiert, um anzuzeigen, dass der ausgewählte Akkumulator 19, 20 im Wartungsladezyklus betrieben wird. Dieses Sperrsignal ist dem jeweiligen Akkumulator 19, 20 zugeordnet und kann beispielsweise die Nummer des jeweiligen Akkumulators 19, 20 enthalten.

In einem Ladeschritt 64 wird der jeweilige Akkumulator 19, 20 geladen.

In einem Entladeschritt 65 wird dieser Akkumulator 19, 20 anschließend entladen, wobei die Kapazität des Akkumulators 19, 20 gemessen wird. Dies erfolgt beispielsweise über Messung von Spannungsverläufen mit der Messvorrichtung 44 oder über Integration von entnommenen Ladungen.

In einem Kontrollschritt 66 wird kontrolliert, ob die gemessene Kapazität unterhalb eines Schwellwerts liegt.

Ist dies der Fall, so wird der Akkumulator 19, 20 als defekt erkannt, und es wird eine Ausgabe 67 eines dem jeweiligen Akkumulator 19, 20 zugeordneten Fehlersignals ausgelöst. Die Zuordnung kann beispielsweise durch Ausgabe, bevorzugt über einen Bus, einer Akkumulatornummer oder durch Verwendung einer individuell zugeordneten Leitung gegeben sein.

Liegt die gemessene Kapazität oberhalb des Schwellwerts, so wird der zugehörige Akkumulator 19, 20 als funktionstüchtig erkannt, und es wird in einer Bestätigung 68 das ordnungsgemäße Funktionieren des Akkumulators 19, 20 bestätigt.

In einem weiteren Ladeschritt 69 wird der Akkumulator 19, 20 in beiden Fällen wieder aufgeladen.

In einer Schleifenverzweigung 70 wird geprüft, ob alle Akkumulatoren 19, 20 abgearbeitet wurden.

Ist dies nicht der Fall, wird in einem Inkrementierschritt 61 der Zählerstand der Akkumulatornummer um 1 erhöht, und es wird mit dem Auswahlschritt 61 erneut fortgefahren.

Ist das Ergebnis der Prüfung in der Schleifenverzweigung 70, dass der letzte Akkumulator 19, 20 abgearbeitet wurde, wird das Verfahren mit dem zyklisch wiederholten Verfahrensabschnitt 72 fortgesetzt.

Der zyklisch wiederholte Verfahrensabschnitt 72 beginnt mit einer Bereitschaftsanzeige 73, gefolgt von einem Rücksetzschritt 74 des genannten Zählers auf die erste Nummer der Akkumulatoren 19, 20.

In einem Auswahlschritt 75 wird wieder der zugehörige Akkumulator 19, 20 zu der aktuellen Zählernummer ausgewählt.

Anschließend wird der zuvor ausgewählte Akkumulator 19, 20 in einem Schritt 76 in einen Erhaltungsladezyklus versetzt.

In einem Warteschritt 77 wird das Erreichen einer vorgegebenen Zykluszeit für eine Wartung abgewartet. Dies kann beispielsweise durch den Zeitgeber 90 vorgegeben sein.

Anschließend wird in einem Anfrageschritt 78 eine Freigabeanfrage versendet.

Das Verfahren wird angehalten, bis in einem Freigabeschritt 79 ein Freigabesignal detektiert wird.

Anschließend wird in einem Ausgabeschritt 80 ein Sperrsignal für die übrigen Akkumulatoren 19, 20 generiert, um zu verhindern, dass weitere Akkumulatoren 19, 20 in den Wartungsladezyklus wechseln können.

In einem Ladeschritt 81 wird der aktuelle Akkumulator 19, 20 nun aufgeladen.

In einem Entladeschritt 82 wird dieser Akkumulator 19, 20 wieder entladen, wobei die Kapazität des Akkumulators 19, 20 gemessen wird.

In einem Kontrollschritt 83 wird geprüft, ob die gemessene Kapazität des Akkumulators 19, 20 unterhalb eines vorgegebenen Schwellwerts liegt.

Ist dies der Fall, so wird in einem Ausgabeschritt 84 das dem jeweiligen Akkumulator 19, 20 zugeordnete Fehlersignal ausgegeben.

Ist dies nicht der Fall, so wird der Akkumulator 19, 20 als funktionstüchtig erkannt, und es wird in einem Bestätigungsschritt 85 die Funktionsfähigkeit des aktuellen Akkumulators 19, 20 bestätigt.

Anschließend wird in einem weiteren Ladeschritt 86 der Akkumulator 19, 20 wieder vollständig aufgeladen.

In einer Schleifenverzweigung 87 wird geprüft, ob der letzte Akkumulator 19, 20 der Energiespeichereinheit 10, 11 oder 18 oder der erfindungsgemäßen Armaturen-Schließvorrichtung 4 erreicht ist. Ist dies der Fall, so wird der zyklisch wiederholte Verfahrensabschnitt 72 mit dem Rücksetzschritt 74 erneut ausgeführt.

Ist noch nicht der letzte Akkumulator 19, 20 erreicht, so wird in einem Inkrementierschritt 88 der Zähler der Nummer des aktuellen Akkumulators 19, 20 erhöht, und das in dem Ausgabeschritt 80 generierte Sperrsignal wird in einem Löschschritt 89 gelöscht. Anschließend wird die Schleife mit dem Auswahlschritt 75 fortgesetzt.

Das beschriebene Verfahren gemäß Fig. 9 kann für jede Energiespeichereinheit 7, 10, 11, 18 separat in der zugehörigen Ladeelektronik 22 oder für alle Ladeelektroniken 22 aller Energiespeichereinheiten 10, 11, 18 gemeinsam ausgeführt werden.

Durch die Generierung von Sperrsignalen und durch die Durchführung von Freigabeanfragen ist sichergestellt, dass zu keinem Zeitpunkt gleichzeitig zwei Akkumulatoren im Wartungsladezyklus betrieben werden. Die Sperrsignale, Freigabesignale und/oder Freigabeanfragen können hierbei von der Arbitriervorrichtung 50 bearbeitet und/oder verwaltet werden. Die Arbitriervorrichtung 50 kann ein Arbitrierverfahren ausführen, wenn gleichzeitig zwei Freigabeanfragen oder zwei Sperrsignale eingehen.

Bei der Armaturen-Schließvorrichtung 4 mit einem Not-Antrieb 7, 8 wird vorgeschlagen, den Not-Antrieb 7, 8 aus wenigstens zwei unabhängig voneinander, redundant betreibbaren Energiespeichereinheiten 10, 11, 18 zu versorgen, wobei jede Energiespeichereinheit 10, 11, 18 jeweils eine Ladeelektronik 22 aufweist, mit welcher Akkumulatoren 19, 20 der Energiespeichereinheiten 10, 11, 18 jeweils zumindest in einem Wartungsladezyklus und in einem Erhaltungsladezyklus betreibbar sind.

## Patentansprüche

1. Armaturen-Schließvorrichtung (4) mit einer Eingangswelle (5) und einer mit der Eingangswelle (5) gekoppelten Abtriebswelle (6) und einem elektrisch betreibbaren Not-Antrieb (7, 8), mit welchem die Abtriebswelle (6) außerhalb eines Normalbetriebs antreibbar ist, wobei der Not-Antrieb (7, 8) aus mindestens zwei voneinander getrennten Energiespeichereinheiten (10, 11, 18) der Armaturen-Schließvorrichtung (4) mit jeweils mindestens einem Akkumulator (19, 20) gespeist ist, wobei jede Energiespeichereinheit (10, 11, 18) jeweils eine Ladeelektronik (22) aufweist, wobei jede Ladeelektronik (22) zumindest in einem Wartungsladezyklus und in einem Erhaltungsladezyklus betreibbar ist und dass eine Ladeelektronik (22) einer Energiespeichereinheit (10, 11, 18) mit einer Ladeelektronik (22) einer weiteren Energiespeichereinheit (10, 11, 18) über eine Signal- und/oder Steuerverbindung (49) derart gekoppelt ist, dass nicht in beiden Energiespeichereinheiten (10, 11, 18) gleichzeitig ein Akkumulator (19, 20) im Wartungsladezyklus betreibbar ist.

2. Armaturen-Schließvorrichtung (4) nach Anspruch 1, **dadurch gekennzeichnet, dass** wenigstens eine Energiespeichereinheit (10, 11, 18) mehr als einen Akkumulator (19, 20) aufweist und die zugehörige Ladeelektronik (22) so eingerichtet ist, dass ein Akkumulator (19, 20) im Wartungsladezyklus betreibbar und ein weiterer Akkumulator (19, 20) zum gleichen Zeitpunkt im Erhaltungsladezyklus betreibbar ist, und/oder dass wenigstens eine Energiespeichereinheit (10, 11, 18) mehr als einen Akkumulator (19, 20) aufweist und die zugehörige Ladeelektronik (22) so eingerichtet ist, dass zu jedem Zeitpunkt höchstens ein Akkumulator (19, 20) im Wartungsladezyklus betreibbar oder betrieben ist.

3. Armaturen-Schließvorrichtung (4) nach einem der Ansprüche 1 oder 2, **dadurch gekennzeichnet, dass** wenigstens eine Energiespeichereinheit (10, 11, 18) mehr als einen Akkumulator (19, 20) aufweist und die zugehörige Ladeelektronik (22) zu einer sukzessiven Durchführung von Wartungsladezyklen an den Akkumulatoren (19, 20) der Energiespeichereinheit (10, 11, 18) eingerichtet ist.

4. Armaturen-Schließvorrichtung (4) nach einem der Ansprüche 1 bis 3, **dadurch gekennzeichnet, dass** eine Arbitriervorrichtung (50) zu einer Generierung eines Sperrsignals eingerichtet ist, wenn ein Akkumulator (19, 20) im Wartungsladezyklus betrieben ist, und/oder dass die oder eine Arbitriervorrichtung (50) zu einer Generierung eines Freigabesignals eingerichtet ist, wenn kein Akkumulator (19, 20) im Wartungsladezyklus betrieben ist.

5. Armaturen-Schließvorrichtung (4) nach einem der Ansprüche 1 bis 4, **dadurch gekennzeichnet, dass** jede Ladeelektronik (22) zu einer Freigabeanfrage an die oder eine Arbitriervorrichtung (50) vor einem Wechsel eines zugehörigen Akkumulators (19, 20) in den Wartungsladezyklus eingerichtet ist.

6. Armaturen-Schließvorrichtung (4) nach einem der Ansprüche 1 bis 5, **dadurch gekennzeichnet, dass** an einem Versorgungsausgang (52) jeder Energiespeichereinheit (10, 11, 18) eine Sperrdiode (53) angeordnet ist und/oder dass wenigstens eine Energiespeichereinheit (10, 11, 18) mehr als einen Akkumulator (19, 20) aufweist und dass an einem Akkumulatorausgang (54) jedes zugehörigen Akkumulators (19, 20) jeweils eine Sperrdiode (55) angeordnet ist.

7. Armaturen-Schließvorrichtung (4) nach einem der Ansprüche 1 bis 6, **dadurch gekennzeichnet, dass** jeder Akkumulator (19, 20) wahlweise mit einem Entladeanschluss (23), einem Erhaltungsladeanschluss (27) und einem Wartungsladeanschluss (25) elektrisch verbindbar ist.

8. Verfahren zum Bereithalten einer Armaturen-Schließvorrichtung (4), wobei die Armaturen-Schließvorrichtung (4) eine Eingangswelle (5) und eine mit der Eingangswelle (5) gekoppelte Abtriebswelle (6) und einen elektrisch betreibbaren Not-Antrieb (7, 8), mit welchem die Abtriebswelle (6) außerhalb eines Normalbetriebs antreibbar ist, aufweist, wobei der Not-Antrieb (7, 8) aus wenigstens zwei voneinander getrennten Energiespeichereinheiten (10, 11, 18) der Armaturen-Schließvorrichtung (4) speisbar ist und/oder gespeist wird, die Energiespeichereinheiten (10, 11, 18) jeweils wenigstens einen Akkumulator (19, 20) aufweisen und wenigstens ein Akkumulator (19, 20) in einem Erhaltungsladezyklus betrieben wird während ein weiterer Akkumulator (19, 20) in einem Wartungsladezyklus betrieben wird und, wenn ein Akkumulator (19, 20) im Wartungsladezyklus betrieben wird, ein Betrieb im Wartungsladezyklus für alle weiteren Akkumulatoren (19, 20) der zugehörigen Energiespeichereinheit (10, 11, 18) und/oder der Armaturen-Schließvorrichtung (4) elektronisch gesperrt wird, wobei, bevor ein Akkumulator (19, 20) im Wartungsladezyklus betrieben wird, auf ein Freigabesignal und/oder auf ein Ende eines Sperrsignals gewartet wird.

9. Verfahren nach Anspruch 8, **dadurch gekennzeichnet, dass** vor einem Wechsel eines Akkumulators (19, 20) in den Wartungsladezyklus in einem Arbitrierungsverfahren geprüft wird, ob momentan ein weiterer Akkumulator (19, 20) im Wartungsladezyklus betrieben wird.

10. Verfahren nach Anspruch 9, **dadurch gekennzeichnet, dass** das oder ein Sperrsignal generiert wird, wenn ein Akkumulator (19, 20) im Wartungsladezyklus betrieben wird.

11. Verfahren nach Anspruch 10, **dadurch gekennzeichnet, dass** die Akkumulatoren (19, 20) einer Energiespeichereinheit (10, 11, 18) sukzessive im Wartungsladezyklus betrieben werden.

12. Verfahren nach einem der Ansprüche 10 bis 11, **dadurch gekennzeichnet, dass** im Wartungsladezyklus eine Kapazität des jeweiligen Akkumulators (19, 20) gemessen wird und/oder dass im Wartungsladezyklus ein Akkumulator (19, 20) vorzugsweise vollständig entladen wird.

13. Verfahren nach einem der Ansprüche 10 bis 12, **dadurch gekennzeichnet, dass** ein Fehlersignal ausgegeben wird, wenn eine oder die gemessene Kapazität eines oder des Akkumulators (19, 20) unter einem Schwellwert liegt.

## Claims

1. Fitting closing device (4) comprising an input shaft (5) and an output shaft (6), which is coupled to the input shaft (5), and an electrically operable emergency drive (7, 8) with which the output shaft (6) can be driven outside normal operation, wherein the emergency drive (7, 8) is fed from at least two energy storage units (10, 11, 18) of the fitting closing device (4) which are separate from one another, the energy storage units each having at least one rechargeable battery (19, 20), wherein each energy storage unit (10, 11, 18) has a charging electronics system (22) in each case, wherein each charging electronics system (22) can be operated at least in a maintenance charging cycle and in a trickle charging cycle, and that a charging electronics system (22) of an energy storage unit (10, 11, 18) is coupled to a charging electronics system (22) of a further energy storage unit (10, 11, 18) by a signal and/or control connection (49) such that a rechargeable battery (19, 20) cannot be operated in the maintenance charging cycle in both energy storage units (10, 11, 18) simultaneously.

2. Fitting closing device (4) as claimed in claim 1, **characterised in that** at least one energy storage unit (10, 11, 18) has more than one rechargeable battery (19, 20) and the associated charging electronics system (22) is designed such that one rechargeable battery (19, 20) can be operated in the maintenance charging cycle and a further rechargeable battery (19, 20) can be operated in the trickle charging cycle at the same time, and/or **in that** at least one energy storage unit (10, 11, 18) has more than one rechargeable battery (19, 20) and the associated charging electronics system (22) is designed such that at most one rechargeable battery (19, 20) can be operated or is operated in the maintenance charging cycle at any time.

3. Fitting closing device (4) as claimed in any one of claims 1 or 2, **characterised in that** at least one energy storage unit (10, 11, 18) has more than one rechargeable battery (19, 20), and the associated charging electronics system (22) is designed to successively carry out maintenance charging cycles on the rechargeable batteries (19, 20) of the energy storage unit (10, 11, 18).

4. Fitting closing device (4) as claimed in any one of claims 1 to 3, **characterised in that** an arbitration device (50) is designed to generate a blocking signal when a rechargeable battery (19, 20) is operated in the maintenance charging cycle, and/or in that the or an arbitration device (50) is designed to generate an enable signal when none of the rechargeable batteries (19, 20) is operated in the maintenance charging cycle.

5. Fitting closing device (4) as claimed in any one of claims 1 to 4, **characterised in that** each charging electronics system (22) is designed to make an enable request to the or an arbitration device (50) before an associated rechargeable battery (19, 20) changes over to the maintenance charging cycle.

6. Fitting closing device (4) as claimed in any one of claims 1 to 5, **characterised in that** a blocking diode (53) is arranged at a supply output (52) of each energy storage unit (10, 11, 18), and/or **in that** at least one energy storage unit (10, 11, 18) has more than one rechargeable battery (19, 20), and **in that** in each case one blocking diode (55) is arranged at a rechargeable battery output (54) of each associated rechargeable battery (19, 20).

7. Fitting closing device (4) as claimed in any one of claims 1 to 6, **characterised in that** each rechargeable battery (19, 20) can be selectively electrically connected to a discharge connection (23), to a trickle charge connection (27) and to a maintenance charge connection (25).

8. Method for keeping ready a fitting closing device (4), wherein the fitting closing device (4) has an input shaft (5) and an output shaft (6), which is coupled to the input shaft (5), and an electrically operable emergency drive (7, 8) with which the output shaft (6) can be driven outside normal operation, wherein the emergency drive (7, 8) can be fed and/or is fed from at least two energy storage units (10, 11, 18) of the fitting closing device (4) which are separate from one another, the energy storage units (10, 11, 18) each have at least one rechargeable battery (19, 20), and at least one rechargeable battery (19, 20) is operated in a trickle charging cycle while a further rechargeable battery (19, 20) is operated in a maintenance charging cycle, and when a rechargeable battery (19, 20) is operated in the maintenance charging cycle, operation in the maintenance charging cycle for all further rechargeable batteries (19, 20) of the associated energy storage unit (10, 11, 18) and/or the fitting closing device (4) is electronically blocked, wherein a rechargeable battery (19, 20) is operated in the maintenance charging cycle only after an enable signal and/or the end of a blocking signal.

9. Method as claimed in claim 8, **characterised in that** before a rechargeable battery (19, 20) changes over to the maintenance charging cycle, a check is made in an arbitration method to determine whether a further rechargeable battery (19, 20) is currently being operated in the maintenance charging cycle.

10. Method as claimed in claim 9, **characterised in that** the or a blocking signal is generated when a rechargeable battery (19, 20) is operated in the maintenance charging cycle.

11. Method as claimed in claim 10, **characterised in that** the rechargeable batteries (19, 20) of an energy storage unit (10, 11, 18) are successively operated in the maintenance charging cycle.

12. Method as claimed in any one of claims 10 to 11, **characterised in that** a capacitance of the respective rechargeable battery (19, 20) is measured in the maintenance charging cycle and/or **in that** a rechargeable battery (19, 20) is preferably fully discharged in the maintenance charging cycle.

13. Method as claimed in any one of claims 10 to 12, **characterised in that** a fault signal is output when a or the measured capacitance of a or the rechargeable battery (19, 20) lies below a threshold value.

## Revendications

1. Dispositif de fermeture de vanne (4) avec un arbre d'entrée (5) et un arbre de sortie (6) couplé à l'arbre d'entrée (5) et un entraînement d'urgence (7, 8) pouvant fonctionner électriquement, avec lequel l'arbre de sortie (6) peut être entraîné en dehors d'un fonctionnement normal, dans lequel l'entraînement d'urgence (7, 8) est alimenté à partir d'au moins deux unités d'accumulation d'énergie séparées l'une de l'autre (10, 11, 18) du dispositif de fermeture de vanne (4) qui comportent respectivement au moins un accumulateur (19, 20), dans lequel chaque unité d'accumulation d'énergie (10, 11, 18) présente respectivement une électronique de charge (22), dans lequel chaque électronique de charge (22) peut fonctionner au moins dans un cycle de charge d'entretien et un cycle de charge de maintien et en ce qu'une électronique de charge (22) d'une unité d'accumulation d'énergie (10, 11, 18) est couplée à une électronique de charge (22) d'une autre unité d'accumulation d'énergie (10, 11, 18) par une liaison de signalisation et/ou de commande (49), de telle manière qu'un accumulateur (19, 20) ne puisse pas fonctionner dans le cycle de charge d'entretien simultanément dans les deux unités d'accumulation d'énergie (10, 11, 18).

2. Dispositif de fermeture de vanne (4) selon la revendication 1, **caractérisé en ce qu'**au moins une unité d'accumulation d'énergie (10, 11, 18) présente plus d'un accumulateur (19, 20) et l'électronique de charge correspondante (22) est conçue de telle manière qu'un accumulateur (19, 20) puisse fonctionner dans le cycle de charge d'entretien et qu'un autre accumulateur (19, 20) puisse au même instant fonctionner dans le cycle de charge de maintien et/ou **en ce qu'**au moins une unité d'accumulation d'énergie (10, 11, 18) présente plus d'un accumulateur (19, 20) et l'électronique de charge correspondante (22) est conçue de telle manière qu'à chaque instant au maximum un accumulateur (19, 20) puisse fonctionner ou fonctionne dans le cycle de charge d'entretien.

3. Dispositif de fermeture de vanne (4) selon l'une des revendications 1 ou 2, **caractérisé en ce qu'**au moins une unité d'accumulation d'énergie (10, 11, 18) présente plus d'un accumulateur (19, 20) et l'électronique de charge correspondante (22) est conçue en vue d'une exécution successive de cycles de charge d'entretien aux accumulateurs (19, 20) de l'unité d'accumulation d'énergie (10, 11, 18).

4. Dispositif de fermeture de vanne (4) selon l'une quelconque des revendications 1 à 3, **caractérisé en ce qu'**un dispositif d'arbitrage (50) est conçu de façon à générer un signal d'arrêt, lorsqu'un accumulateur (19, 20) fonctionne dans le cycle de charge d'entretien et/ou **en ce que** le ou un dispositif d'arbitrage (50) est conçu de façon à générer un signal de libération, lorsqu'aucun accumulateur (19, 20) ne fonctionne dans le cycle de charge d'entretien.

5. Dispositif de fermeture de vanne (4) selon l'une quelconque des revendications 1 à 4, **caractérisé en ce que** chaque électronique de charge (22) est conçue en vue d'une demande de libération au ou à un dispositif d'arbitrage (50) avant un changement d'un accumulateur correspondant (19, 20) vers le cycle de charge d'entretien.

6. Dispositif de fermeture de vanne (4) selon l'une quelconque des revendications 1 à 5, **caractérisé en ce qu'**une diode d'arrêt (53) est disposée à une sortie d'alimentation (52) de chaque unité d'accumulation d'énergie (10, 11, 18) et/ou **en ce qu'**au moins une unité d'accumulation d'énergie (10, 11, 18) présente plus d'un accumulateur (19, 20) et **en ce qu'**une diode d'arrêt (55) est disposée respectivement à une sortie d'accumulateur (54) de chaque accumulateur correspondant (19, 20).

7. Dispositif de fermeture de vanne (4) selon l'une quelconque des revendications 1 à 6, **caractérisé en ce que** chaque accumulateur (19, 20) peut être relié électriquement au choix à un raccord de décharge (23), à un raccord de charge de maintien (27) et à un raccord de charge d'entretien (25).

8. Procédé de réalisation d'un dispositif de fermeture de vanne (4), dans lequel le dispositif de fermeture de vanne (4) présente un arbre d'entrée (5) et un arbre de sortie (6) couplé à l'arbre d'entrée (5) et un entraînement d'urgence (7, 8) pouvant fonctionner électriquement, avec lequel l'arbre de sortie (6) peut être entraîné en dehors d'un fonctionnement normal, dans lequel l'entraînement d'urgence (7, 8) peut être et/ou est alimenté à partir d'au moins deux unités d'accumulation d'énergie séparées l'une de l'autre (10, 11, 18) du dispositif de fermeture de vanne (4), les unités d'accumulation d'énergie (10, 11, 18) comportent respectivement au moins un accumulateur (19, 20) et au moins un accumulateur (19, 20) fonctionne dans un cycle de charge de maintien tandis qu'un autre accumulateur (19, 20) fonctionne dans le cycle de charge d'entretien et, lorsqu'un accumulateur (19, 20) fonctionne dans le cycle de charge d'entretien, on arrête électroniquement un fonctionnement dans le cycle de charge d'entretien pour tous les autres accumulateurs (19, 20) de l'unité d'accumulation d'énergie correspondante (10, 11, 18) et/ou du dispositif de fermeture de vanne (4), dans lequel, avant de faire fonctionner un accumulateur (19, 20) dans le cycle de charge d'entretien, on attend un signal de libération et/ou la fin d'un signal d'arrêt.

9. Procédé selon la revendication 8, **caractérisé en ce qu'**avant un changement d'un accumulateur (19, 20) vers le cycle de charge d'entretien, on vérifie par un procédé d'arbitrage si un autre accumulateur (19, 20) fonctionne à cet instant dans le cycle de charge d'entretien.

10. Procédé selon la revendication 9, **caractérisé en ce que** l'on génère le ou un signal d'arrêt, lorsqu'un accumulateur (19, 20) fonctionne dans le cycle de charge d'entretien.

11. Procédé selon la revendication 10, **caractérisé en ce que** l'on fait fonctionner les accumulateurs (19, 20) d'une unité d'accumulation d'énergie (10, 11, 18) successivement dans le cycle de charge d'entretien.

12. Procédé selon l'une des revendications 10 à 11, **caractérisé en ce que** l'on mesure dans le cycle de charge d'entretien une capacité de l'accumulateur respectif (19, 20) et/ou **en ce que** l'on décharge de préférence complètement un accumulateur (19, 20) dans le cycle de charge d'entretien.

13. Procédé selon l'une quelconque des revendications 10 à 12, **caractérisé en ce que** l'on émet un signal de défaut, lorsqu'une ou la capacité mesurée d'un ou de l'accumulateur (19, 20) se situe en dessous d'une valeur de seuil.
